# EUROPEAN PATENT APPLICATION

(11) **EP 4 195 123 A1**
(43) Date of publication of application: **14.06.2023**
(21) Application number: 21854138.1
(22) Date of filing: 20.07.2021
(51) Int. Cl.: G06Q 10/08, B65G 1/137

(54) **ARTICLE HANDLING PLANNING DEVICE, ARTICLE HANDLING SYSTEM, AND ARTICLE HANDLING PLANNING PROGRAM**

(30) Priority: 07.08.2020 JP 2020135037
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: ASARI, Yukio, Kawasaki-shi, Kanagawa 212-0013 (JP)
(74) Representative: Horn Kleimann Waitzhofer Patentanwälte PartG mbB
(86) International application number: PCT/JP2021/027166
(87) International publication number: WO 2022/030249

(57) **Abstract**

A product-processing planning device, a product processing system, and a product-processing planning program which enable processing of products without lowering execution capacity as a whole are provided. A product-processing planning device according to an embodiment has a first interface, a processor, and a second interface. The first interface acquires past processed data including the number of products of each batch processed in the past by a product processing apparatus, which processes the products categorized into a plurality of batches. The processor estimates the number of products of each batch to be processed by the product processing apparatus based on the past processed data acquired by the first interface and creates a product processing plan in which processing periods obtained by dividing a period of processing the products of each batch into a plurality of periods are allocated depending on the estimated number of the products of each batch. The second interface outputs the product processing plan generated by the processor to a control device of the product processing apparatus.

## Description

### FIELD

An embodiment of the present invention relates to a product-processing planning device, a product processing system, and a product-processing planning program.

### BACKGROUND

Recently, in logistics centers, etc., the volume of handled products such as packages or paper sheets is increasing, and various improvements in efficiency about product processing are made. For example, in a logistics center, the packages arrive in one day are categorized into a plurality of batches depending on the areas of addresses, and the packages of the same area are processed together. The packages processed by the batches are shipped out at the shipment time, which is defined for the areas corresponding to the respective batches. Generally, a product processing system installed in a logistics center is designed so that the throughput of products per hour is larger than the volume of the products which arrive at the logistics center per hour. If it is designed so that the incoming speed of products (volume of arrivals) is close to the processing speed of products (throughput), the product processing system can be a system which can efficiently process the arriving products.

However, in practice, products sequentially arrive at a logistics center at arbitrary timing. Therefore, in the product processing system which is designed so that the volume of arrivals and the throughput are equal to each other, it is possible that some of the products cannot be processed until predetermined time (shipment time) depending on the allocation of processing periods to batches. For example, with a product processing plan in which switching of batches serving as processing targets is reduced, it is possible that some of the products which have arrived before shipment time are not processed until the shipment time and stay in the logistics center until the next shipment time, and the execution capacity of the product processing system as a whole is lowered.

### CITATION LIST

### PATENT LITERATURE

Patent literature 1: Jpn. Pat. Appln. KOKAI Publication No. 2001-297140

### SUMMARY

### TECHNICAL PROBLEM

In order to solve the above described problem, the present invention provides a product-processing planning device, a product processing system, and a product-processing planning program which enable processing of products without lowering execution capacity as a whole.

A product-processing planning device according to an embodiment has a first interface, a processor, and a second interface. The first interface acquires past processed data including the number of products of each batch processed in the past by a product processing apparatus, which processes the products categorized into a plurality of batches. The processor estimates the number of products of each batch to be processed by the product processing apparatus based on the past processed data acquired by the first interface and creates a product processing plan in which processing periods obtained by dividing a period of processing the products of each batch into a plurality of periods are allocated depending on the estimated number of the products of each batch. The second interface outputs the product processing plan generated by the processor to a control device of the product processing apparatus.

### BRIEF DESCRIPTION OF THE DRAWING(S)

FIG. 1 is a diagram illustrating an example of a schematic configuration of a product processing system according to an embodiment.
FIG. 2 is a diagram for schematically describing a configuration example of an overall control system according to the embodiment.
FIG. 3 is a block diagram illustrating a configuration example of a control system in a control device of the overall control system according to the embodiment.
FIG. 4 is a block diagram illustrating a configuration example of a control system in a product-processing planning device of the overall control system according to the embodiment.
FIG. 5 is a diagram illustrating an example of a product processing plan.
FIG. 6 is a diagram illustrating an example of the results of processing in accordance with the product processing plan illustrated in FIG. 5.
FIG. 7 is a diagram illustrating an example of a product processing plan created by the product-processing planning device according to the embodiment.
FIG. 8 is a diagram illustrating an example of results of processing in accordance with the product processing plan created by the product-processing planning device according to the embodiment illustrated in FIG. 7.
FIG. 9 is a flow chart for describing a creation process of the product processing plan by a plan creation unit serving as the product-processing planning device according to the embodiment.
FIG. 10 is a flow chart for describing an operation control example based on the product processing plan by the overall control system according to the embodiment.

### DETAILED DESCRIPTION

Hereinafter, an embodiment will be described with reference to drawings.

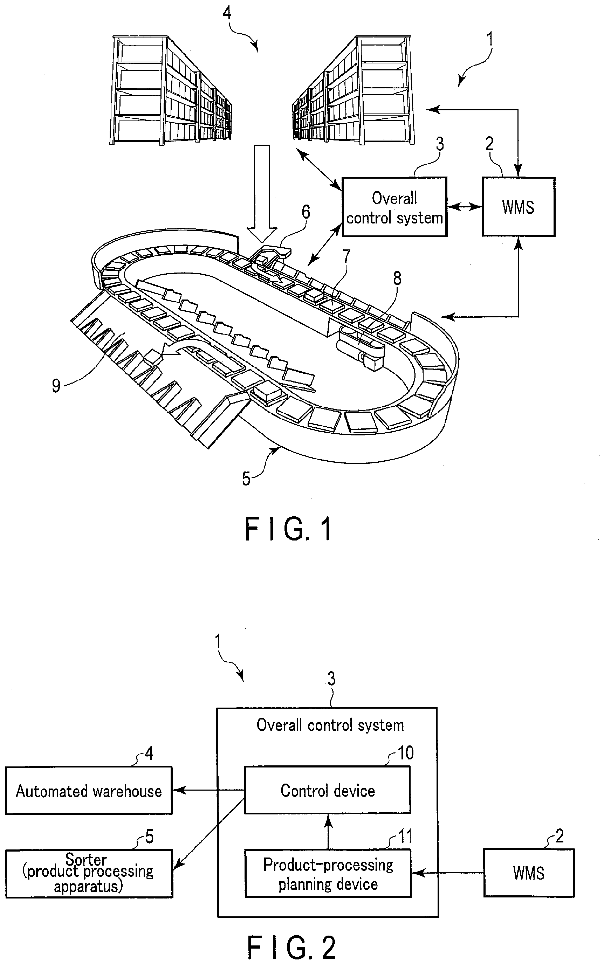

FIG. 1 is a diagram illustrating an example of a schematic configuration of a product processing system 1 according to the embodiment.

As illustrated in FIG. 1, the product processing system 1 is provided with a warehouse management system (WMS) 2, an overall control system 3, an automated warehouse 4, and a sorter 5. The product processing system 1 is a system which carries out product processing of storing, in the automated warehouse 4, products (items), which have arrived at a logistics center and been categorized into a plurality of batches, and sorting the products for every batch by a sorter.

The batches categorize the products, which serve as the processing targets, by predetermined categories. In the present embodiment, the products (the products serving as the processing targets), which arrive at the logistics center, are categorized by the batches and housed in the automated warehouse 4. For example, if the products are delivery objects which are to be sent to addresses, the batches are categorized by predetermined delivery regions (areas) based on the addresses (destinations) of the products. As a specific example, the products which are addressed to an area A are categorized into a batch 1, and the products addressed to an area B (C, D, or E) are categorized into a batch 2 (3, 4, or 5).

The WMS 2 is built by one computer or a combination of a plurality of computers. The WMS 2 communicates with equipment in the overall control system 3, the automated warehouse 4, and the sorter 5 and external equipment such as an upper-level server by wire or radio. The WMS 2 acquires information from the equipment in the overall control system 3, the automated warehouse 4, and the sorter 5 and the external equipment such as the upper-level server and stores the acquired information. Also, the WMS 2 supplies information to the equipment in the overall control system 3, the automated warehouse 4, and the sorter 5. For example, the WMS 2 saves the information about the products of each batch and provides the information showing, for example, the past number of products in each batch to the overall control system.

The overall control system 3 is built by one computer or a combination of a plurality of computers. The overall control system 3 communicates with the equipment in the WMS 2, the automated warehouse 4, and the sorter 5 and external equipment such as an upper-level server by wire or radio. The overall control system 3 acquires information from and supplies control signals to the WMS 2, the automated warehouse 4, and the sorter 5 and the external equipment such as the upper-level server. For example, the overall control system 3 controls the entire product management system 1 in the logistics center by transmitting the control signals, etc. to the equipment in the automated warehouse 4 and the sorter 5 based on the information acquired from the WMS 2.

The automated warehouse 4 houses the products which are categorized by the batches. For example, the products which have arrived at the logistics center are subjected to recognition of the information (for example, addresses) for categorizing by the batches and are housed in the automated warehouse 4 in a state in which the products are categorized by the batches. The automated warehouse 4 manages the products by the batches and supplies the products of the batches, which are serving as the processing targets of the sorter 5, to the sorter 5. For example, the product housed by the automated warehouse 4 is picked up by a robot, which operates in response to control instructions from the overall control system 3, and is supplied to a supply position of the product in the sorter 5.

The sorter 5 is a product processing apparatus, which executes the process of sorting the supplied products. In the present embodiment, the products of the batches serving as the processing targets are supplied to the sorter 5, and the sorter 5 executes a batch process of processing the products of each batch. In a configuration example illustrated in FIG. 1, the sorter 5 moves the products, which are placed on a supply unit 6, to carriers 7. The sorter 5 moves the carriers 7, on which the products are placed, in the direction of an arrow by a motor 8. The sorter 5 acquires category information such as the addresses of the products placed on the carriers 7 and sends the products to a chute at the positions determined depending on the category information. As a result, the sorter 5 executes the product processing as a sorting process of categorizing the products, which are supplied by the batches, into category positions corresponding to the category information.

Next, a configuration of the overall control system 3 according to the embodiment will be described.

FIG. 2 is a diagram for schematically describing a configuration example of the overall control system 3 according to the embodiment.

In the configuration example illustrated in FIG. 2, the overall control system 3 has a control device 10 and a product-processing planning device 11. The overall control system 3 includes one or a plurality of computer (s). The control device 10 operates as a control unit which controls the entire product processing system 1. The product-processing planning device 11 operates as a plan creation unit which creates a product processing plan for processing the products by batches in the product processing system 1.

In the configuration example illustrated in FIG. 2, the product-processing planning device 11 acquires, from the WMS 2, past processed data or processed data in operation. The product-processing planning device 11 creates a product processing plan, which is for processing products by the batches, based on the information such as the past processed data acquired from the WMS 2. The product-processing planning device 11 supplies the created product processing plan to the control device 10. The control device 10 acquires the product processing plan, which has been created by the product-processing planning device 11. The overall control system 3 controls the operation of the automated warehouse 4, the sorter (product processing apparatus) 5, etc. so that the control device 10 processes the products in accordance with the product processing plan created by the product-processing planning device 11.

Also, the product-processing planning device 11 has a function to correct the product processing plan based on the information such as the processed data in operation acquired from the WMS 2. When the product processing plan is corrected, the product-processing planning device 11 supplies the corrected product processing plan to the control device 10. The control device 10 acquires the product processing plan which has been corrected by the product-processing planning device 11.

Herein, the product processing plan created by the product-processing planning device 11 shows a processing schedule for processing the products, which have arrived at the logistics center, by the sorter 5, which serves as the product processing apparatus, and shipping the products which have been processed by the sorter 5. In the present embodiment, the sorter 5 serving as the product processing apparatus of the product processing system 1 carries out the process of sorting the products which are supplied by the batches from, for example, the automated warehouse 4. Therefore, the product-processing planning device 11 creates the product processing plan which shows the allocation of processing periods with respect to the batches as the schedule for the sorter 5 to process the products of each batch.

Also, the present embodiment assumes that the product processing system 1 carries out processing so that the arrived products become a shippable state within one day (24 hours). Therefore, the product-processing planning device 11 creates the product processing plan which shows the allocation of the processing period of each batch in one day. However, the product processing system 1 is only required to be able to process products until shipment time and is not limited to process products within one day. Also, the product processing plan is not limited to show the schedule of one day, but the schedule is only required to enable processing of products until predetermined shipment time.

Note that the configuration example illustrated in FIG. 2 illustrates the control device 10 and the product-processing planning device 11 in the overall control system 3. In the overall control system 3, the control device 10 and the product-processing planning device 11 may be realized by one device or may be realized by separate devices. For example, if the control device 10 and the product-processing planning device 11 are to be realized by one computer, the overall control system 3 may have a computer in which a program (operation control program) which operates as the control device 10 and a program (product-processing planning program) which operates as the product-processing planning device 11 are installed.

Next, a configuration of a control system in the control device 10 of the overall control system 3 according to the embodiment will be described.

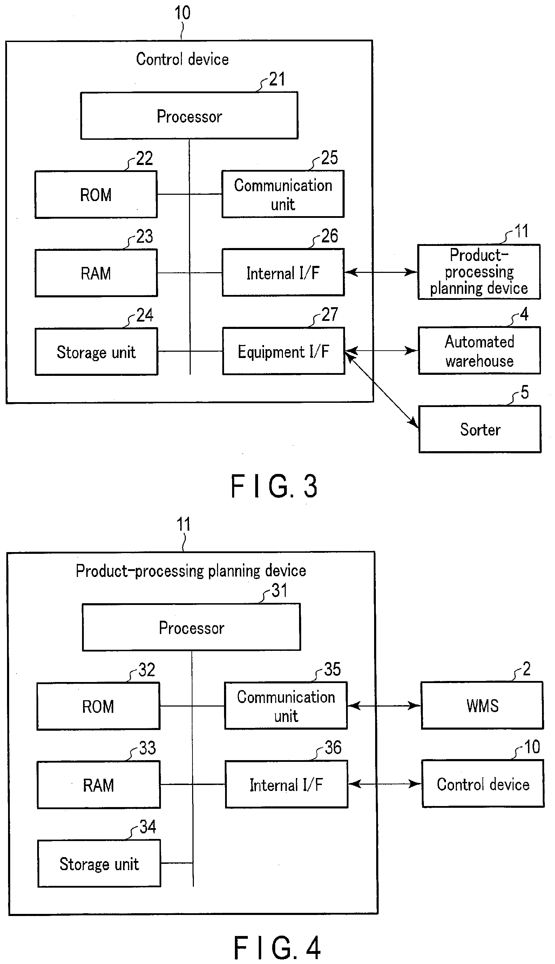

FIG. 3 is a block diagram illustrating a configuration example of the control system in the control device 10 of the overall control system 3 according to the embodiment.

As illustrated in FIG. 3, the control device 10 is provided with, for example, a processor 21, a ROM 22, a RAM 23, a storage unit 24, a communication unit 25, an internal interface (I/F) 26, and an equipment interface (I/F) 27.

The processor (second processor) 21 corresponds to a central part of the computer which carries out computation. The processor 21 executes various processing based on a program such as system software, application software, or firmware stored in, for example, the ROM 22 or the storage unit 24. The processor 21 is, for example, a central processing unit (CPU), a micro processing unit (MPU), or a digital signal processor (DSP). Also, the processor 21 may be a combination of a plurality of them.

The ROM 22 is a non-temporary computer-readable storage medium and corresponds to a main storage device of the computer which uses the processor 21 as a center. The ROM 22 is a non-volatile memory used for reading data. The ROM 22 stores programs. Also, the ROM 22 stores, for example, data or various set values used for the processor 21 to carry out various processing.

The RAM 23 corresponds to a main storage device of the computer which uses the processor 21 as the center. The RAM 23 is a memory used for reading/writing data. The RAM 23 has a recording area used as, for example, a work area. The RAM 23 stores the data which is temporarily used by the processor 21 in various processing.

The storage unit 24 is a non-temporary computer-readable storage medium and corresponds to an auxiliary storage device of the computer which uses the processor 21 as the center. The storage unit 24 includes a rewritable non-volatile memory. For example, the storage unit 24 stores a program for causing the processor 21 to operate as the control unit of the control device 10. Also, the storage unit 24 saves, for example, the data for the processor 21 to carry out various processing, the data generated by the processing in the processor 21, or various set values.

The communication unit 25 includes one or a plurality of communication interface(s). The communication unit 25 includes a communication interface for communicating with external devices such as the WMS 2 by wire or radio, for example, via a network.

The internal interface 26 includes a communication interface (third interface) for communicating with the product-processing planning device 11 by wire or radio in the overall control system 3. For example, the internal interface 26 acquires the data which shows the product processing plan from the product-processing planning device 11. Also, the internal interface 26 may be configured to acquire the data for correcting the product processing plan from the product-processing planning device 11.

The equipment interface 27 includes an interface (fourth interface) for communicating with equipment serving as a control target. For example, the equipment interface 27 includes a communication interface for communicating with a control device of the automated warehouse 4 by wire or radio. Also, the equipment interface 27 includes a communication interface for communicating with the sorter 5, which serves as the product processing apparatus, by wire or radio.

Note that the control device 10 may have, for example, a display unit and an operation unit. The display unit includes a display device and, for example, displays various information to an operator. Also, the operation unit can be realized by a unit including, for example, a keyboard, a ten-key numeric keypad, a mouse, and a touch screen. Also, as the display unit and the operation unit, a display equipped with a touch screen may be configured to be provided.

Next, a configuration of a control system in the product-processing planning device 11 of the overall control system 3 according to the embodiment will be described.

FIG. 4 is a block diagram illustrating a configuration example of the control system in the product-processing planning device 11 of the overall control system 3 according to the embodiment.

As illustrated in FIG. 4, the product-processing planning device 11 included in the overall control system 3 is provided with, for example, a processor 31, a ROM 32, a RAM 33, a storage unit 34, a communication unit 35, and an internal interface (I/F) 36.

The processor (first processor) 31 corresponds to a central part of the computer which carries out computation. The processor 31 executes various processing based on a program such as system software, application software, or firmware stored in, for example, the ROM 32 or the storage unit 34. The processor 31 is, for example, a central processing unit (CPU), a micro processing unit (MPU), or a digital signal processor (DSP). Also, the processor 31 may be a combination of a plurality of them.

The ROM 32 is a non-temporary computer-readable storage medium and corresponds to a main storage device of the computer which uses the processor 31 as a center. The ROM 32 is a non-volatile memory used for reading data. The ROM 32 stores programs. Also, the ROM 32 stores, for example, data or various set values used for the processor 31 to carry out various processing.

The RAM 33 corresponds to a main storage device of the computer which uses the processor 31 as the center. The RAM 33 is a memory used for reading/writing data. The RAM 33 has a recording area used as, for example, a work area. The RAM 33 stores the data which is temporarily used by the processor 31 in various processing.

The storage unit 34 is a non-temporary computer-readable storage medium and corresponds to an auxiliary storage device of the computer which uses the processor 31 as the center. The storage unit 34 includes a rewritable non-volatile memory. For example, the storage unit 34 stores the program which is executed by the processor 31. Also, the storage unit 34 saves, for example, the data for the processor 31 to carry out various processing, the data generated by the processing in the processor 31, or various set values.

The programs stored in the ROM 32 or the storage unit 34 include the program (product-processing planning program) for creating the product processing plan. For example, the product-processing planning device 11 is delivered to a business operator in a state in which the product-processing planning program is stored in the ROM 32 or the storage unit 34. Also, the product-processing planning program may be configured to be written in a storage unit of a device used as the product-processing planning device installed at the business operator. In such a case, the product-processing planning program may be delivered to the business operator in a state in which the program is recorded in a removable storage medium such as a magnetic disk, a magnet-optical disk, an optical disk, or a semiconductor memory. Also, the product-processing planning program may be configured to be delivered to the business operator by downloading via, for example, a network.

The communication unit 35 includes one or a plurality of communication interface(s) (first interface). The communication unit 35 includes a communication interface for communicating with the WMS 2 by wire or radio, for example, via a network. For example, the communication unit 35 acquires the past processed data or the processed data in operation from the WMS 2.

The internal interface 36 includes a communication interface (second interface) for communicating with the control device 10 by wire or radio in the overall control system 3. For example, the internal interface 36 supplies the data, which shows the product processing plan created from, for example, the past processed data, to the control device 10.

Note that the product-processing planning device 11 may have, for example, a display unit and an operation unit. The display unit includes a display device and, for example, displays various information to an operator. Also, the operation unit can be realized by a unit including, for example, a keyboard, a ten-key numeric keypad, a mouse, and a touch screen. Also, as the display unit and the operation unit, a display equipped with a touch screen may be configured to be provided.

Next, the product processing plan for processing the products by the batches in the product processing system 1 according to the embodiment will be described.

In the present embodiment, the product processing plan shows the processing periods in which the sorter 5 processes the products of the batches. Also, as an arrangement in terms of operation, it is assumed that pause periods in which processing is paused and the shipment time at which the products of the batches processed by the sorter 5 are shipped out (shipment time for each batch) are determined in advance.

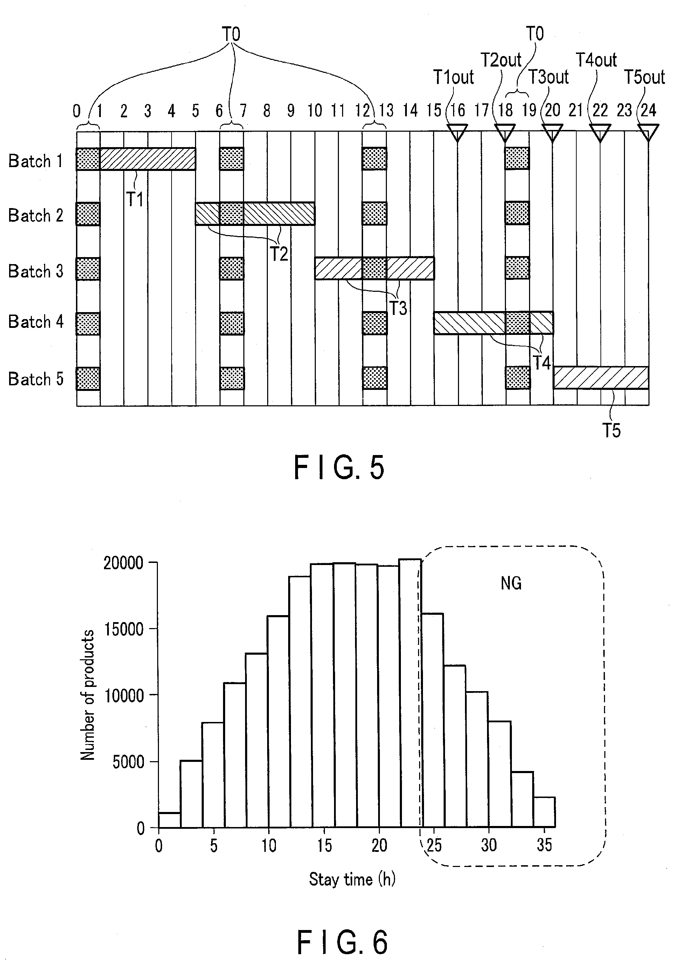

FIG. 5 is a diagram illustrating an example of the product processing plan.

The product processing plan illustrated in FIG. 5 is an example of the plan scheduled so that the processes (batch processes) with respect to the products of respective batches 1 to 5 are carried out by processing period T1 to T5, which are continuous once in one day, as a schedule of one day (24 hours).

However, in the product processing plan illustrated in FIG. 5, pause periods T0 (00:00 to 01:00, 06:00 to 07:00, 12:00 to 13:00, and 18:00 to 19:00) are set four times in one day. The pause period T0 is a period in which the operation of the product management system is paused and the products are not processed. Also, in the product processing plan illustrated in FIG. 5, shipment time T1out to T5out of the respective batches 1 to 5 are set. In the example of the product processing plan illustrated in FIG. 5, the shipment time T1out of the batch 1 is 16:00, the shipment time T2out of the batch 2 is 18:00, the shipment time T3out of the batch 3 is 20:00, the shipment time T4out of the batch 4 is 22:00, and the shipment time T5out of the batch 5 is 24:00.

In the product processing plan illustrated in FIG. 5, the processing period T1 of the products of the batch 1 is 01:00 to 05:00. The processing period T2 of the products of the batch 2 is 05:00 to 06:00 and 07:00 to 10:00 (05:00 to 10:00 including the pause period of 06:00 to 07:00). The processing period T3 of the products of the batch 3 is 10:00 to 12:00 and 13:00 to 15:00 (10:00 to 15:00 including the pause period of 12:00 to 13:00). The processing period T4 of the products of the batch 4 is 15:00 to 18:00 and 19:00 to 20:00 (15:00 to 20:00 including the pause time of 18:00 to 19:00). The processing period T5 of the products of the batch 5 are 20:00 to 24:00.

As illustrated in FIG. 5, when the processes with respect to the products of each batch are continuously carried out, the work for switching the products serving as the processing targets (switching of the batches) is reduced. Therefore, the work time, etc. required for switching the batches can be saved. However, if the time at which the processes end with respect to a certain batch (process end time) and the shipment time is different from each other, the products which arrive between the process end time and the shipment time stay until the process time of the next day. As a result, the products arrived between the process end time and the shipment time are processed in the next day and are shipped out at the shipment time in the next day. Therefore, time of 24 hours or more takes from the arrival to the shipment.

In the product processing plan illustrated in FIG. 5, each of the batches 1 to 4 except for the batch 5 takes time until the shipment time after the process end time. Therefore, the products which have arrived between the process end time and the shipment time among the products of the batches 1 to 4 take time of 24 hours or more until shipment. For example, the batch 1 has the process end time of 05:00 and the shipment time of 16:00. Therefore, the products of the batch 1 which have arrived between 05:00 and 16:00 take time of 24 hours or more until shipment.

FIG. 6 is a diagram illustrating an example of the results of processing products by using the product processing plan illustrated in FIG. 5. The example illustrated in FIG. 6 shows occurrence of many products which stay in the system for 25 hours or more. If the capacity (throughput per hour) of the product processing system 1 is larger than the number of products which arrive per hour, the products which stay for 25 hours or more are the products which have arrived between the process end time and the shipment time and are conceivably the products which have not been processed due to the product processing plan. In other words, in the case in which the product processing plan is applied as illustrated in FIG. 5, even if the product processing system 1 has enough capacity, it takes time of 24 hours or more from arrival until shipment with respect to the products which arrive between the process end time and the shipment time, and the execution capacity as the entire system is lowered.

Next, a product processing plan created by the product-processing planning device 11 of the overall control system 3 according to the embodiment will be described.

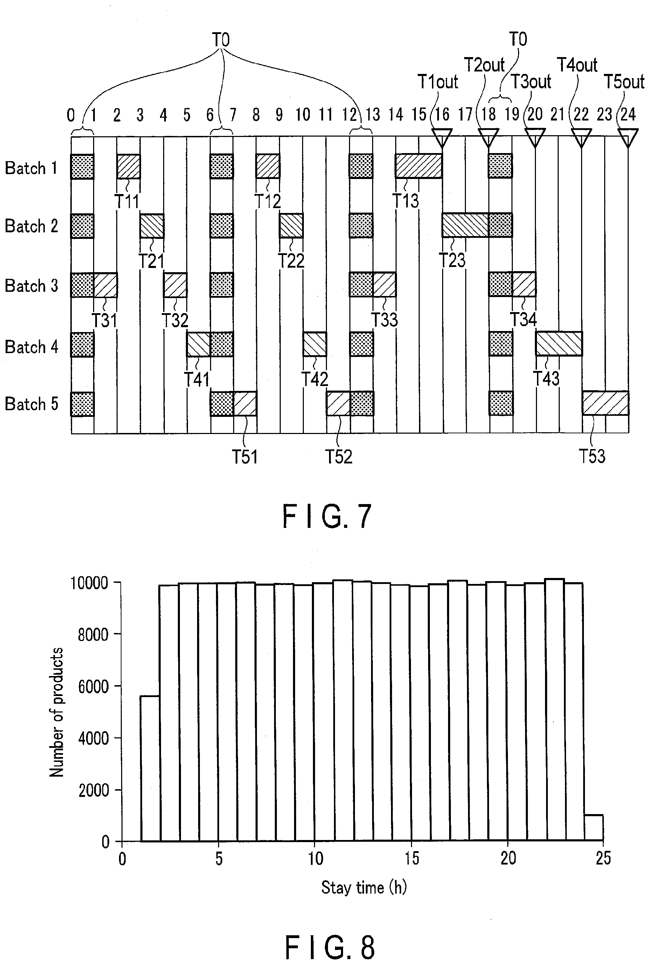

FIG. 7 is a diagram illustrating an example of the product processing plan created by the product-processing planning device 11 of the overall control system 3 according to the embodiment.

The product processing plan illustrated in FIG. 7 is an example of the plan scheduled to be carried out with processing periods T1n to T5n which are obtained by dividing the periods T1 to T5, which are for processing (batch process) the products of the respective batches 1 to 5, into a plurality of pieces in the schedule of one day (24 hours). Note that, in the product processing plan illustrated in FIG. 7, the pause periods T0 and the shipment time T1out to T5out of the batches are the same as those illustrated in FIG. 5.

In the product processing plan illustrated in FIG. 7, the period T1, in which the products of the batch 1 are processed, is divided into three, i.e., a first period T11 of 02:00 to 03:00, a second period T12 of 08:00 to 09:00, and a third period T13 of 14:00 to 16:00, and the third period T13 (T1s3 to T1e3) is the processing period immediately before shipment with respect to the batch 1.

Also, the period T2, in which the products of the batch 2 are processed, is divided into 3(n), i.e., a first period T2s1 of 03:00 to 04:00, a second period T22 of 09:00 to 10:00, and a third period T23 of 16:00 to 18:00, and the third period T23 (T2s3 to T2e3) is the processing period immediately before shipment with respect to the batch 2.

Also, the period T3, in which the products of the batch 3 are processed, is divided into four, i.e., a first period T31 of 01:00 to 02:00, a second period T32 of 04:00 to 05:00, a third period T33 of 13:00 to 14:00, and a fourth period T34 of 19:00 to 20:00, and the fourth period T34 (T3s4 to T3e4) is the processing period immediately before shipment with respect to the batch 3.

Also, the period T4, in which the products of the batch 4 are processed, is divided into 3(n), i.e., a first period T41 of 05:00 to 06:00, a second period T42 of 10:00 to 11:00, and a third period T43 of 20:00 to 22:00, and the third period T43 (T4s3 to T4e3) is the processing period immediately before shipment with respect to the batch 4. Also, the period T5, in which the products of the batch 5 are processed, is divided into 3(n), i.e., a first period T51 of 07:00 to 08:00, a second period T52 of 11:00 to 12:00, and a third period T53 of 22:00 to 24:00, and the third period T53n (T5s3 to T5e3) is the processing period immediately before shipment with respect to the batch 5.

The product processing plan created by the product-processing planning device 11 is a schedule in which the period for processing the products of each batch is divided into a plurality of periods and subjected to allocation as illustrated in FIG. 7. When a period Ti, in which the products of a batch i are processed, is divided into n pieces of processing periods, the n-th processing period (the processing period immediately before shipment) Tin (Tisn to Tien) of the batch i is set immediately before the shipment time Tiout of the batch i. In other words, the product-processing planning device 11 creates the product processing plan so that the time at which the process ends with respect to the batch i (process end time Tien) matches the shipment time Tiout.

Also, the processing period Tin immediately before shipment with respect to the batch i is allocated depending on, for example, the shipment time of the other batches while a margin for processing the products of the batch i is ensured.

In the example of the product processing plan illustrated in FIG. 7, the difference (T5out-T4out) in the shipment time between the batch 5, which is shipped out at the end of one day, and the batch 4, which is shipped immediately therebefore, is two hours. Therefore, a period of two hours (22:00 to 24:00) is allocated to the batch 5 as the processing period T53 immediately before shipment.

The difference (T4out-T3out) in the shipment time between the batch 4 and the batch 3, which is shipped out immediately therebefore, is two hours. Therefore, a period of two hours (20:00 to 22:00) is allocated to the batch 4 as the processing period T43 immediately before shipment.

The difference (T3out-T2out) in the shipment time between the batch 3 and the batch 2, which is shipped out immediately therebefore, is two hours including the pause period of one hour (18:00 to 19:00). Therefore, the period of one hour (19:00 to 20:00) is ensured as the processing period T34 immediately before shipment with respect to the batch 3.

The difference (T2out-T1out) in the shipment time between the batch 2 and the batch 1, which is shipped out immediately therebefore, is two hours. Therefore, the period of two hours (16:00 to 18:00) is ensured as the processing period T23 immediately before shipment with respect to the batch 2.

The processing period T13 immediately before shipment with respect to the batch 1 ensures a period of two hours (14:00 to 16:00) in consideration of adjustment with the processing periods of the other batches. In the example of the product processing plan illustrated in FIG. 7, in consideration of the fact that the processing period T34 immediately before shipment with respect to the batch 3 is one hour, the processing period T33 of the batch 3 corresponding to one hour is allocated immediately before the processing period T13, which is corresponding to two hours and immediately before shipment with respect to the batch 1.

Also, the time remaining after allocating the processing periods (T13, T23, T34, T43, and T53) immediately before shipment with respect to the batches 1 to 5 is dispersedly allocated to the processing periods, which are divided by the batches, so that the products of the batches can be efficiently processed. In the example of the product processing plan illustrated in FIG. 7, the processing period corresponding to one hour is allocated twice to each of the batches 1 to 5 between 01:00 to 12:00. It is assumed that the product processing plan illustrated in FIG. 7 is created on the assumption that the number of products of each of the batches 1 to 5 is equivalent. However, the allocation of the processing periods to each of the batches is adjusted depending on a prediction value of, for example the number of products of each batch. Also, if there are gaps between arrival time slots depending on the batches, the allocation of the processing periods to each batch may be configured to be adjusted depending on a prediction value of, for example, the arrival time slot of the products (number of arrivals of each time slot) of each batch.

FIG. 8 is a diagram illustrating an example of the results of processing the products of the batches by using the product processing plan illustrated in FIG. 7.

The example of the processing results illustrated in FIG. 8 shows that the number of the products which stay in the system over 24 hours is small and that no products stay over 25 hours. In other words, when the product processing plan as illustrated in FIG. 7 is applied, as long as the products which cannot be processed within the processing period immediately before shipment do not arrive, the product processing system 1 processes the products of the batches within 24 hours since the process end time is the shipment time with respect to each batch. Therefore, the product processing system 1 can create the product processing plan optimized for processing the products of the batches within 24 hours and can realize the operation that does not lower the execution capacity as the entire system.

Next, a creation process of the product processing plan by the product-processing planning device 11 of the overall control system 3 according to the embodiment will be described.

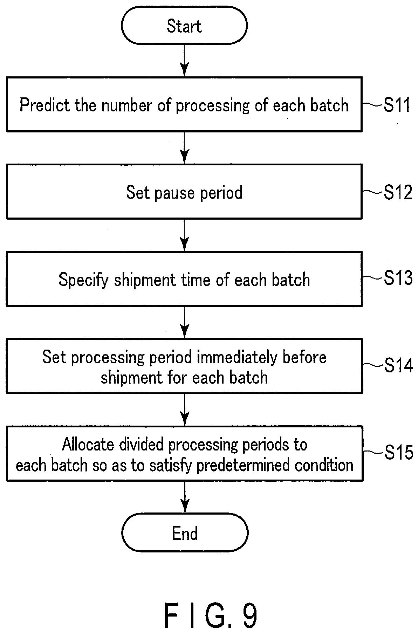

FIG. 9 is a flow chart for describing the creation process of the product processing plan by the product-processing planning device 11 of the overall control system 3 according to the embodiment.

When the product processing plan is to be created, in the overall control system 3, the processor 31 of the product-processing planning device 11 activates the product-processing planning program stored in the storage unit 34. When the product-processing planning program is activated, the processor 31 acquires the past processed data, which shows the results of product processing executed in the past in the product processing system 1. For example, the processor 31 acquires the past processed data from the WMS 2 via the communication unit 35. The past processed data is the information including the number of processing (number of products) of each batch processed in the past by the logistics center (product processing system 1).

When the past processed data is acquired, the processor 31 calculates the prediction value of each batch of the processing day which is to be scheduled based on the past processed data (S11) . For example, the processor 31 extracts, for each batch, information such as the number of arrivals, the number of processing, and the arrival time slots from the past processed data and calculates the prediction value of the information about the arriving products for each batch. For example, the processor 31 calculates the prediction value of the number of products of each batch which arrive in one day (the number of products serving as processing targets in one day) from the past processed data. Also, the processor 31 may be configured to calculate, from the past processed data, the prediction value of, for example, the number of arrivals in every predetermined time slot (for example, in every one hour) for each batch.

After the prediction value of each batch is calculated, the processor 31 sets the pause periods T0 in the period (one day) to be scheduled (S12). The information which shows the pause periods may be configured to be acquired from the WMS 2 or may be stored in the storage unit 34. Also, if the pause periods are unnecessary in terms of operation, the pause periods are not required to be set.

Furthermore, the processor 31 specifies the shipment time T1out to T5out at which the products of the batches processed in the product processing system 1 are to be shipped out (S13). The processor 31 may be configured to acquire the shipment time T1out to T5out of the batches from the WMS 2. Also, the shipment time T1out to T5out of the batches may be configured to be stored in the storage unit 34. In such a case, the processor 31 acquires the shipment time T1out to T5out of the batches from the storage unit 34.

After the shipment time of each batch is specified, the processor 31 sets the processing period which is immediately before shipment with respect to each batch (S14). The processor 31 sets the processing period, which is immediately before shipment with respect to each batch, depending on the shipment time of the batches which are shipped out therebefore/thereafter. According to the example illustrated in FIG. 7, as the processing periods immediately before shipment with respect to the batches 1 to 5, the processor 31 sets the periods T13, T23, T34, T43, and T53 for which the corresponding shipment time T1out to T5out is the end time T1e3, T2e3, T3e4, T4e3, and T5e3.

After the processing period immediately before shipment with respect to each batch is set, the processor 31 allocates the processing periods with respect to each batch in the time slots other than the processing period immediately before shipment (S15). For example, the processor 31 allocates the divided processing periods, which are with respect to the batches, so that a condition 1 and a condition 2 below are satisfied.

The condition 1 is that "the maximum number processable and the actually processed number of products in a j-th processing period Tij (Tisj to Tiej) allocated to a batch i" are equal to or lower than "the sum of the number of products of the batch i unprocessed at start time (T1sj) of the j-th processing period Tij and the number of products of the batch i which newly come in (arrive) during the processing period Tij (Tisi to Tiei).

The condition 2 is that "the maximum number processable and the actually processed number of products in the processing period Tin (Tisn to Tiout) immediately before shipment of the batch i" are equal to or higher than "the sum of the number of products of the batch i unprocessed at the start time (Tisn) of the processing period Tin immediately before shipment and the number of products of the batch i which newly come in (arrive) during the processing period Tin immediately before shipment.

For example, the processor 31 may be configured to divide the time, which is allocated to each batch, by predetermined time (for example, one hour) depending on the prediction value of the number of products of one day and carry out scheduling so that the processing periods of each batch divided by the predetermined time satisfy the condition 1 and the condition 2. Also, the processor 31 may be configured to retain the once created product processing plan in the storage unit 34 and correct, depending on a change in the prediction value of the number of products, so that the scheduling of the processing periods with respect to each batch satisfy the condition 1 and the condition 2.

Next, operation control in accordance with the product processing plan by the overall control system 3 according to the embodiment will be described.

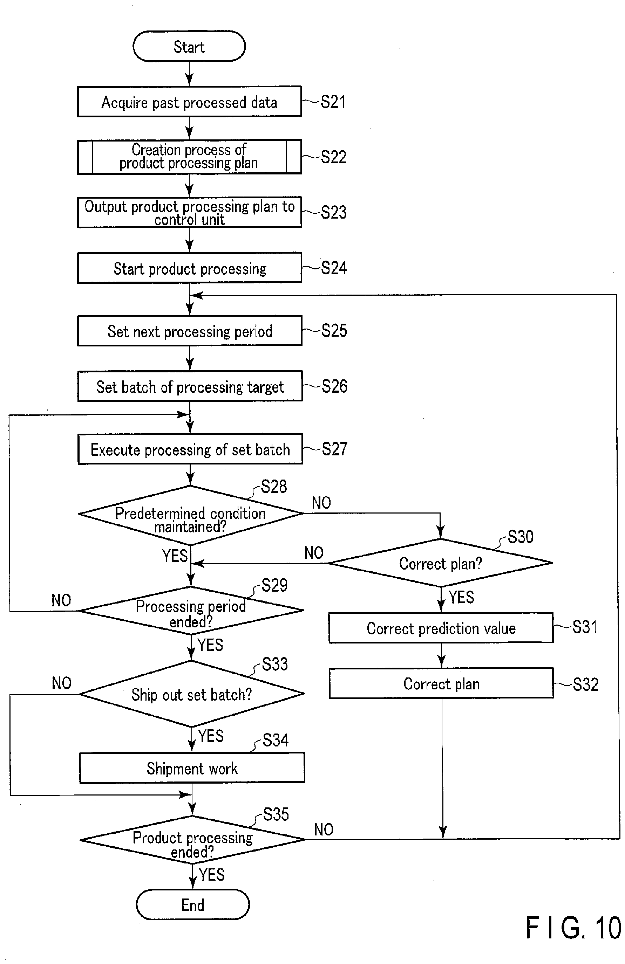

FIG. 10 is a flow chart for describing a flow of the operation control in accordance with the product processing plan by the overall control system 3 according to the embodiment.

First, in the overall control system 3, the processor 31 of the product-processing planning device 11 activates the product-processing planning program stored in the storage unit 34. The processor 31 of the product-processing planning device 11 acquires the past processed data from the WMS 2 via the communication unit 35 (S21) . The past processed data acquired from the WMS 2 is the information including the number of products (number of processing) of each batch processed in the past by the logistics center (product processing system 1).

After the past processed data is acquired from the WMS 2, the processor 31 executes the creation process of creating the product processing plan, in which the processing period of each batch is divided into a plurality of periods and subjected to allocation, based on the acquired past processed data (S22). The creation process of the product processing plan is executed by the creation process of the product processing plan as described above.

After the product processing plan is created, the processor 31 outputs the created product processing plan to the control device 10 by the internal interface 36 (S23).

On the other hand, the processor 21 of the control device 10 activates the operation control program stored in the storage unit 24. The processor 21 of the control device 10 acquires the product processing plan created by the product-processing planning device 11 via the internal interface 26. The processor 21 of the control device 10 retains, in the RAM 23 or the storage unit 24, the product processing plan acquired from the product-processing planning device 11 and starts product processing using the automated warehouse 4 and the sorter 5 (S24).

After the product processing is started, the processor 21 sets a first processing period in accordance with the product processing plan (S25) and sets the batch which serves as the processing target in this processing period (S26). For example, if the product processing plan illustrated in FIG. 7 is acquired, the processor 21 sets the processing period T31 which processes the batch 3 as the first processing period. Since the processing period T31 is the period in which the products of the batch 3 are processed between 01:00 and 02:00, the processor 21 sets 01:00 to 02:00 as the processing period and sets the batch 3 as the batch which serves as the processing target.

After the processing period and the batch which serves as the processing target are set, the processor 21 carries out the control to execute the processing with respect to the products of the set batch (S27). For example, the processor 21 outputs the control signals, which instruct execution of processing of the set batch, to the automated warehouse 4 and the sorter 5 via the equipment interface 27. For example, the automated warehouse 4 supplies the products of the batch, which is specified by the control signal supplied from the control device 10, to the supply unit 6 of the sorter 5. Also, the sorter 5 executes product processing (sorting) with respect to the products of the batch, which is supplied from the automated warehouse 4 to the supply unit 6 and serves as the processing target, and the products of the batch, which is supplied to the supply unit 6 without the intermediation of the automated warehouse 4 and serves as the processing target.

During the product processing by the control of the control device 10, the processor 31 of the product-processing planning device 11 collects the information which shows the status of processing and judges whether a predetermined condition is maintained or not (S28). For example, the processor 31 acquires the information, which shows the number of actually arrived products and the number of unprocessed products, from the WMS 2 as the processed data in operation and judges whether the volume processable in the processing period allocated by the product processing plan is maintained or not. Herein, the processor 31 judges whether the above described condition 1 is satisfied or not with respect to the processing period allocated by the product processing plan.

If the predetermined condition is not maintained (S28, NO), the processor 31 judges whether to correct the current product processing plan or not (S30). For example, if the deviation frequency with respect to the condition 1 exceeds a predetermined threshold value, the processor 31 corrects the product processing plan. Also, the processor 31 may be configured to correct the product processing plan if "the sum of the number of unprocessed products and the number of arriving products" is larger than "the maximum number processable in the processing period" by a predetermined number (predetermined threshold value) or more.

If it is judged that the product processing plan is to be corrected (S30, YES), the processor 31 corrects the prediction value of each batch by calculating the prediction value of, for example, the number of products of the processing target based on the data in operation (current processed data) such as the current number of arrivals and the number of unprocessed products acquired from the WMS 2 via the communication unit 35 (S31).

After the prediction value is corrected, the processor 31 corrects the current product processing plan based on the corrected prediction value (S32). Since the product processing is being executed herein, the processor 31 corrects the plan so that the product processing in operation does not stagnate. For example, the processor 31 corrects the plan, for example, by extending or shortening the processing period in the product processing plan while the product processing currently being executed is continued.

When the product processing plan is corrected, the processor 31 supplies the correction data of the product processing plan to the control device 10 via the internal interface 36. After the correction data of the product processing plan is acquired from the product-processing planning device 11, the processor 21 of the control device 10 proceeds to S25 and sets the processing period again in accordance with the corrected product processing plan. Also, if the batch serving as the processing target is changed by the correction of the product processing plan, the processor 21 also changes the setting of the batch serving as the processing target.

If the predetermined condition is maintained (S28, YES) or if correction of the product processing plan is unnecessary (S30, NO), the processor 21 of the control device 10 monitors whether the set processing period has ended or not (S29). If it is during the set processing time (S29, NO), the processor 21 returns to S27 and causes the processing with respect to the products of the set batch to be continuously executed.

Also, if the set processing time has ended (S29, YES), the processor 21 judges whether to ship out the products of the batch, which has been set as the processing target, or not (S33). If the products are to be shipped out (S33, YES), the processor 21 outputs a shipment instruction and causes the shipment work of shipping out the products of the processed batch to be carried out (S34).

If the shipment work has been carried out or if it has been judged not to ship out the products of the batch (S33, NO), the processor 21 judges whether to end the product processing based on the product processing plan or not (S35). If the product processing is not to be ended (S35, NO), the processor 21 returns to S25 and sets the next processing period in accordance with the current product processing plan. Also, after the next processing period is set, the processor 31 sets the batch serving as the processing target which is to be processed in the newly set processing period (S26) and executes the above described process of S27 and thereafter again.

As described above, the product-processing planning device according to the present embodiment predicts the number of products of each batch of the processing day from the past processed data, divides the period of processing the products of each batch into a plurality of pieces based on the predicted number of products of each batch, and creates the product processing plan in which the divided processing periods are allocated.

By virtue of this, even in a situation that the volume of products (volume of arrivals) input to the logistics center and the volume of products (capacity) processable by the product processing system installed in the logistics center are almost equal to each other under a restriction that the shipment time of each batch is once per one day, the product processing plan capable of processing the products, which arrive at the logistics center, within 24 hours until the shipment time can be created. As a result, the product processing system including the product-processing planning device can prevent the arrived products from staying over a predetermined deadline (for example, one day) .

Also, the product-processing planning device according to the present embodiment creates the product processing plan in which the processing period of each batch is preferentially allocated immediately before the shipment time of the batch. By virtue of this, according to the product processing plan created by the product-processing planning device, the processing period can be ensured immediately before the shipment time with respect to the products of each batch, and even the products which arrive immediately before the shipment time can be processed in time for the shipment time.

Some embodiments of the present invention have been described. However, these embodiments are presented as examples and are not intended to limit the scope of the invention. These new embodiments can be carried out in various other modes, and various omissions, replacements, and changes can be made within the scope not deviating from the gist of the invention. These embodiments and modifications thereof are included in the scope and gist of the invention and are included in the invention described in patent claims and the scope of equivalents thereof.

## Claims

1. A product-processing planning device comprising:
a first interface configured to acquire past processed data including a number of a product of each batch processed in past by a product processing apparatus, which processes the product categorized into a plurality of batches;
a processor configured to estimate the number of the product of each batch, which is to be processed by the product processing apparatus, based on the past processed data acquired by the first interface and create a product processing plan in which processing periods obtained by dividing a period of processing the product of each batch into a plurality of periods are allocated depending on the estimated number of the product of each batch; and
a second interface configured to output the product processing plan created by the processor to a control device of the product processing apparatus.

2. The product-processing planning device according to claim 1, wherein the processor creates the product processing plan in which a processing period among the plurality of processing periods divided with respect to each batch is preferentially allocated immediately before shipment time of the batch.

3. The product-processing planning device according to claim 2, wherein the processor creates the product processing plan allocating the processing period so that the number of the product to be processed in the processing period allocated immediately before the shipment time is equal to or lower than a maximum number of the product processable by the product processing apparatus in the processing period.

4. The product-processing planning device according to any one of claims 1 to 3, wherein
the processor creates the product processing plan allocating the processing period so that the number of the product to be processed in the processing period is equal to or higher than the maximum number of the product processable by the product processing apparatus in the processing period.

5. The product-processing planning device according to any one of claims 1 to 4, wherein
the first interface further acquires processed data in operation including the number of the product of each batch serving as a processing target of the product processing apparatus in operation in accordance with the product processing plan, and
the processor corrects the product processing plan based on the processed data in operation acquired by the first interface.

6. A product processing system comprising a control device and a product-processing planning device; wherein
the product-processing planning device comprises
a first interface configured to acquire past processed data including a number of a product of each batch processed in past by a product processing apparatus, which processes the product categorized into a plurality of batches,
a first processor configured to estimate the number of the product of each batch to be processed by the product processing apparatus based on the past processed data acquired by the first interface and create a product processing plan in which processing periods obtained by dividing a period of processing the product of each batch into a plurality of periods are allocated depending on the estimated number of the product of each batch, and
a second interface configured to output the product processing plan generated by the first processor to the control device which controls operation of the product processing apparatus; and
the control device comprises
a third interface configured to acquire the product processing plan created by the product-processing planning device,
a second processor configured to set a processing period and the batch serving as a processing target in accordance with the product processing plan acquired by the third interface and generate a control signal which causes the product processing apparatus to process the product of the batch serving as the processing target in the set processing period, and
a fourth interface configured to output the control signal generated by the second processor to the product processing apparatus.

7. The product processing system according to claim 6, wherein the first processor of the product-processing planning device creates the product processing plan in which a processing period among the plurality of processing periods divided with respect to each batch is preferentially allocated immediately before shipment time of the batch.

8. The product processing system according to claim 7, wherein the first processor of the product-processing planning device creates the product processing plan allocating the processing period so that the number of the product to be processed in the processing period allocated immediately before the shipment time is equal to or lower than a maximum number of the product processable by the product processing apparatus in the processing period.

9. The product processing system according to any one of claims 6 to 8, wherein
the first processor of the product-processing planning device creates the product processing plan allocating the processing period so that the number of the product to be processed in the processing period is equal to or lower than the maximum number of the product processable by the product processing apparatus in the processing period.

10. The product processing system according to any one of claims 6 to 9, wherein
the first interface of the product-processing planning device further acquires processed data in operation including the number of the product of each batch serving as the processing target of the product processing apparatus in operation in accordance with the product processing plan,
the first processor of the product-processing planning device corrects the product processing plan based on the processed data in operation acquired by the first interface,
the second interface of the product-processing planning device outputs correction data of the product processing plan based on the correction of the product processing plan by the first processor to the control device,
the third interface of the control device acquires the correction data of the product processing plan from the product-processing planning device, and,
when the correction data of the product processing plan is acquired by the third interface, the second processor of the control device sets the processing period and the batch serving as the processing target again in accordance with the product processing plan corrected by the correction data.

11. A product-processing planning program for causing a computer to execute:
a procedure of acquiring, by a first interface, past processed data including a number of a product of each batch processed in past by a product processing apparatus, which processes the product categorized into a plurality of batches;
a procedure of estimating the number of the product of each batch, which is to be processed by the product processing apparatus, based on the past processed data;
a procedure of creating a product processing plan in which processing periods obtained by dividing a period of processing the product of each batch into a plurality of periods are allocated depending on the estimated number of the product of each batch; and
a procedure of outputting, by a second interface, the created product processing plan to a control device of the
product processing apparatus.
